(19)

Europäisches Patentamt
European Patent Office
Office européen des brevets

(11) **EP 2 802 043 A1**

(12) **EUROPEAN PATENT APPLICATION**

(43) Date of publication:
**12.11.2014 Bulletin 2014/46**

(21) Application number: **13002465.6**

(22) Date of filing: **08.05.2013**

(51) Int Cl.:
**H01S 3/00** *(2006.01)*       **H01S 3/13** *(2006.01)*
**G02F 1/35** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Max-Planck-Gesellschaft zur Förderung der Wissenschaften e.V.
80539 München (DE)**

(72) Inventors:
• **Hölzer, Philipp
91088 Bubenreuth (DE)**
• **Chang, Wonkeun
Acton, ACT 2601 (AU)**
• **Travers, John
91056 Erlangen (DE)**
• **Biancalana, Fabio
Edinburgh, EH28 8NY (GB)**
• **Russell, Philip
91341 Röttenbach (DE)**

(74) Representative: **Hertz, Oliver
v. Bezold & Partner
Patentanwälte
Akademiestrasse 7
80799 München (DE)**

(54) **Method and light pulse source for generating soliton light pulses**

(57)     A method of generating light pulses comprises providing pump laser pulses (1) with a pump laser source (10), coupling the pump laser pulses (1) into a pulse guiding medium (20) having an anomalous group-velocity dispersion and a Kerr nonlinearity, and propagating the pump laser pulses along the pulse guiding medium (20), wherein soliton-shaped light pulses are formed from the pump laser pulses within the pulse guiding medium (20) and, resulting from a photoionization of the pulse guiding medium (20) by the soliton-shaped light pulses, the soliton-shaped light pulses are subjected to a frequency shift towards higher spectral energies, wherein the method further includes setting the pump laser source (10) and the pulse guiding medium (20) such that the soliton-shaped light pulses are fundamental soliton light pulses (2) propagating in the pulse guiding medium (20), wherein the group-velocity dispersion of the pulse guiding medium (20) being selected such that a ratio of the group velocity dispersion and the power dependent Kerr nonlinearity decreases with increasing frequency and the fundamental soliton light pulses (2) are compressed simultaneously with the frequency shift. Furthermore, a light pulse source device (100) for generating compressed and frequency up-shifted light pulses is described.

FIG. 1

EP 2 802 043 A1

**Description**

Field of the invention

The present invention relates to a method of generating soliton light pulses, in particular using optical waveguides with non-linear optical properties. Furthermore, the present invention relates to a light pulse source device for generating soliton light pulses, in particular comprising a pump laser source and a gas-filled hollow optical waveguide device. Applications of the invention are available in the fields of e. g. biomedical imaging, metrology, spectroscopy and material processing.

Technical background of the invention

In the present specification, reference is made to the following publications cited for illustrating prior art techniques, in particular conventional non-linear optics and techniques of generating soliton light pulses.

[1] Franken et al., Phys. Rev. Lett. 7, 118 (1961),
[2] Nisoli et al., Appl. Phys. Lett. 68, 2793 (1996),
[3] Mamyshev et al., Phys. Rev. Lett. 71, 73 (1993),
[4] Hölzer et al., Phys. Rev. Lett. 107, 203901 (2011),
[5] Saleh et al., Phys. Rev. Lett. 107, 203902 (2011),
[6] Russell, J. Lightwave Technol. 24, 4729 (2006),
[7] Kuehl, J. Opt. Soc. Am. B 5, 709 (1988),
[8] Chang et al., Opt. Express 19, 21018 (2011),
[9] Husko et al., Nature Scientific Reports (3 : 1100, DOI: 10.1038/srep01100),
[10] Travers et al., J. Opt. Soc. AM. B 28, A11-A26 (2011),
[11] Joly et al., Phys. Rev. Lett. 106, 203901 (2011),
[12] Nold et al., Opt. Lett. 35, 2922-2924 (2010),
[13] Marcatili et al., Bell Syst. Tech. J. 43, 1783-1809 (1964),
[14] Husakou et al., Phys. Rev. Lett. 87, 203901 (2001),
[15] Kolesik et al., Phys. Rev. Lett. 89, 283902 (2002),
[16] Kinsler, Phys. Rev. A 81, 013819 (2010),
[17] Geissler et al., Phys. Rev. Lett. 83, 2930-2933 (1999),
[17] Ammosov et al., Sov. Phys. JETP 64, 1191-1194 (1986),
[18] Yudin et al., Phys. Rev. A 64, 013409 (2001),
[19] Wood et al., IEEE T. Plasma Sci. 21, 20-33 (1993),
[20] Lægsgaard et al., Opt. Lett. 34, 3710-3712 (2009),
[21] Nold, "Nonlinear femtosecond photonics in gas-filled hollow-core photonic crystal fibres," Ph.D. thesis, Universität Erlangen-Nürnberg (2011),
[22] Hölzer, "Nonlinear fiber optics in gases and dilute plasma," Ph.D. thesis, Universität Erlangen-Nürnberg (2012),
[23] Couny et al., Opt. Lett. 31, 3574-3576 (2006),
[24] Wang et al., Opt. Lett. 36, 669-671 (2011),
[25] Couny et al., Opt. Express 16, 20626-20636 (2008),
[26] Saleh et al., Phys. Rev. A 84, 063838 (2011),
[27] Shim et al., Opt. Express 19, 9118 (2011),
[28] Tajima, Opt. Lett. 12, 54-56 (1987),
[29] Chernikov et al. Opt. Lett. 18, 476-478 (1993),
[30] Iwatsuki et al., IEEE Photonics Technology Letters 3, 1074-1076 (1991),
[31] Travers et al. Opt. Express 15, 13203-13211 (2007), and
[32] Gordon, Opt. Lett. 11, 662-664 (1986).

Ultrashort light pulses are widely applied where precise timing resolution or high intensities stored in brief time are needed. While the frequency (or wavelength) of ultrashort light pulses typically is characterized by a center frequency, the pulses have a broad spectrum of frequency components. Multiple types of laser pulse source are available, wherein light pulses are generated e. g. using a mode-locking mechanism in a laser resonator. For obtaining ultrashort light pulses, pulse compression techniques can be applied. In addition, for reducing the pulse duration, higher frequencies are more favorable since a single cycle of the center frequency poses a fundamental limit to achievable pulse durations. Therefore, there is an interest in frequency up-conversion (frequency upshift) of light pulses. In most cases of conventional techniques, the frequency up-conversion and the pulse compression are carried out separately, requiring a cascade of devices each performing a single task.

Frequency up-conversion is based e. g. on nonlinear parametric processes, e. g. in a crystal or a fiber with a nonlinear susceptibility [1]. Limitations of this technique are: the difficulty in tuning the generated wavelength (usually determined by the wavelength of the pump field), the low damage threshold that prevents applications for high-energy pulses, and the requirement of establishing phase matching. This causes low conversion efficiencies and narrow output spectra. Alternatively, frequency up-conversion can be obtained by a plasma-based blue-shifting in media of restricted length and normal dispersion. For too short propagation distances a frequency up-shift cannot accumulate and hence will be limited to low frequency intervals. Furthermore, normal dispersion limits the intensity of the frequency shifted light pulses.

Pulse compression is based e. g. on two stages of spectral broadening and subsequent chirp compensation: a nonlinear spectral broadening stage that, in general, leads to residual phase modulation; and the compression stage where the phase is compensated for in an dispersive device such as chirped mirrors, prisms or gratings [2]. The drawbacks of this technique are the complexity of the setup, the regular need for realignment and the strongly modulated spectral amplitude that will lead to satellite pulses in the time domain.

Another approach uses a temporal compression of soliton-shaped light pulses in a conventional compact fiber (adiabatic soliton compression). For a fundamental soliton pulse in a fiber, the pulse duration can be reduced by decreasing the group velocity dispersion along the fiber, increasing the power dependent nonlinearity or enhancing the pulse energy with optical gain. This, however, requires the use of e. g. a tapered fiber or a fiber doped with a lasing gain material. Furthermore, multiple conditions with regard to the variation of the fiber dispersion and a broad-band transmission of the fiber must be satisfied. Generally, conventional adiabatic soliton compression is limited to low soliton energies, which can propagate in compact fibers, and thus to particular applications, such as optical communications.

A higher order soliton is a soliton pulse whose temporal envelope undergoes periodic oscillations along propagation. At some distances the pulse can be shorter than the input pulse, leading to compression (higher-order soliton compression). This technique though enabling very short pulse durations suffers from low quality factors (most of the energy is not contained within the FWHM), the strong dependence upon length and the sensitivity to slight perturbations.

Soliton-shaped light pulses also have been investigated in hollow-core photonic crystal fibers (PCFs), which have made it possible to transfer gas-based nonlinear optics to small-core optical fibers [10]. PCF-based systems combine the merits of conventional fibers, such as tight mode confinement over long interaction lengths and precise control over the dispersion profile, with the advantages of gases, where material breakdown does not amount to a permanent damage and transparency can be achieved even in extreme wavelength ranges. In the case of kagomé PCF [6], these features have been harnessed to observe highly efficient wavelength-tunable UV generation [11].

P. Hölzer et al. and Saleh et al. have described ionization-based nonlinear fiber optics, where soliton self-compression can lead to intensities sufficient to partially ionize the filling gas, and a subsequent soliton self-frequency blue-shift results from the free-electron induced phase-modulation ([4], [5], [26]). Saleh et al. [26] derived an approximate numerical propagation equation for pulses in self-ionized media as well as analytical expressions for idealized cases. In addition, the physics of some cases of light-plasma interactions are discussed. Further elaboration and the discussion of other effects can be found in Saleh & Biancalana [6]. As a disadvantage of this approach, the dynamics of the results were dominated by the initial stage of higher order soliton propagation and compression, and the emission of multiple self-frequency blue-shifting solitons. In particular, [26] shows that there is no continuous compression; rather the ejected soliton maintains its initial duration.

Mamyshev et al. have described another scheme that combines both frequency conversion and pulse compression [3]. The pulse perceives decreasing dispersion in a single-mode silica fiber due to the Raman-induced soliton self-frequency downshift, which results in an adiabatic soliton compression. However, this technique is restricted to a frequency downconversion, and it does not allow a frequency up-conversion. As a further limitation, a very small compression factor was observed only (96 fs to 55 fs) due to a small Raman-induced frequency shift (1.57 $\mu$m to 1.62 $\mu$m) and a decreasing effective nonlinearity resulting from the frequency downshift.

Objective of the invention

The objective of the invention is to provide an improved method of generating light pulses avoiding limitations of conventional techniques. In particular, the objective of the invention is to provide a improved method of compressing light pulses. In addition, the objective is to provide an improved method for the spectral up-conversion of light pulses. Furthermore, the objective of the invention is to provide an improved light pulse source device avoiding limitations of conventional techniques.

Brief summary of the invention

According to a first general aspect of the invention, the above objective is solved by a method of generating light pulses, wherein pump laser pulses from a pump laser source are coupled into a pulse guiding medium having an anomalous group-velocity dispersion (GVD) and a Kerr nonlinearity. The pump laser pulses propagate along the pulse guiding medium, wherein soliton-shaped light pulses are formed from the pump laser pulses within the pulse guiding medium. The soliton-shape of the light pulses is determined by the anomalous group-velocity dispersion and the Kerr nonlinearity (third-order susceptibility) of the pulse guiding medium. Furthermore, the soliton-shaped light pulses are formed with such an intensity, that the pulse guiding medium is subjected to a photoionization (creation of free charge carriers, in particular electrons, in the pulse guiding medium) resulting in a frequency shift of the soliton-shaped light pulses towards higher spectral energies (plasma-induced frequency up-conversion).

According to the invention, the pump laser source and the pulse guiding medium are set (adjusted and/or operated) such that the soliton-shaped light pulses are fundamental soliton light pulses propagating in the pulse guiding medium. The fundamental soliton light pulses have sufficient intensity for inducing the photoionization. Advantageously, by creating the fundamental soliton light pulses, variations of the pulse shape are avoided which would occur with higher order solitons during propagation thereof.

Furthermore, according to the invention, the group-velocity dispersion of the pulse guiding medium is selected such that a ratio of the group velocity dispersion and the power-dependent Kerr nonlinearity (Kerr nonlinearity depending on the nonlinear refractive index of the pulse guiding medium, e. g. a gas, and an effective transverse area of the pulse guiding medium, e. g. a waveguide structure) decreases with increasing frequency of the propagating soliton-shaped light pulses. This results in a compression (decrease of pulse duration, temporal compression) of the fundamental soliton light pulses during propagation along the pulse guiding medium. Advantageously, the compression is provided in the pulse guiding medium simultaneously with the frequency shift. With the inventive method, ultrashort light pulses are created, i. e. pulses with a duration below 100 ps, in particular below 1 ps, e. g. below 100 fs.

The term "pump laser source" refers to any pulse laser. The pulse laser can operate on a pulse-per-pulse basis or in a repetitive mode. Preferably, the pulse laser creates pulses with a duration below 100 ps. The term "pulse guiding medium" (or: pulse propagating medium) refers to any medium presenting an optical path for propagating the light pulses. According to the invention, any arrangement which has anomalous group velocity dispersion and does not suffer permanent damage due to the induced frequency shifting mechanism can be used. The pulse guiding medium is transmissive in the spectral frequency ranges of the input and output pulses. Depending on the type and design of the pulse guiding medium, the anomalous group-velocity dispersion and the Kerr nonlinearity thereof can be provided by properties of the material guiding the light in the pulse guiding medium, or by the properties of the complete pulse guiding medium, i. e. by the light guiding material and the surrounding structure.

Fundamental optical solitons are optical pulses for which the linear dispersion caused by the geometry (e. g. the optical waveguide), and the material (i.e. the filling gas), are balanced by the nonlinearity.

According to a second general aspect of the invention, the above objective is solved by a light pulse source device, comprising a pump laser source being capable of creating pump laser pulses and a pulse guiding medium which is transmissive for the pump laser pulses. The pump laser source is arranged for coupling the pump laser pulses into the pulse guiding medium, e. g. by optical focussing elements or by a contact allowing a direct coupling of the pump laser pulse light field from the pump laser source into the pulse guiding medium. The pulse guiding medium has an anomalous group-velocity dispersion and a Kerr nonlinearity, so that it is capable of forming soliton-shaped light pulses from the pump laser pulses. The pump laser source and the pulse guiding medium are configured such that, resulting from a photoionization of the pulse guiding medium by the soliton-shaped light pulses, the soliton-shaped light pulses can be subjected to a frequency shift towards higher spectral energies.

Furthermore the pump laser source and the pulse guiding medium of the inventive light pulse source device are configured such that the soliton-shaped light pulses are fundamental soliton light pulses propagating in the pulse guiding medium and said fundamental soliton light pulses having sufficient intensity for inducing the photoionization. The group-velocity dispersion of the pulse guiding medium is selected such that a ratio of the group velocity dispersion and the power-dependent Kerr nonlinearity decreases with increasing frequency. Accordingly, the fundamental soliton light pulses can be compressed simultaneously with the frequency shift during propagation along the pulse guiding medium. The light pulse source for generating compressed and frequency up-shifted light pulses preferably is configured for performing the method according to the above first aspect of the invention.

Advantageously, the invention provides a combined pulse compression and plasma-induced frequency up-conversion in the pulse guiding medium, such as e. g. a gas filled hollow waveguide. Optical light pulses propagate in the pulse guiding medium where the GVD is anomalous and its magnitude decreases as a function of frequency. Pulses are adjusted with such parameters that fundamental solitons (i.e. a non-spreading wavepackets) are formed in the pulse guiding medium. Pulses of sufficient intensity in the pulse guiding medium undergo the plasma-induced self-frequency upshift in the pulse guiding medium. The change in center frequency causes a decrease in dispersion and an increase in nonlinearity, so that the propagating soliton, while upshifting, adjusts to the changing properties by shortening its pulse duration accordingly.

Accordingly, an adiabatic soliton compression ([7]) is obtained which, contrary to the conventional compression in a tapered fiber, does not require a GVD change along the propagation direction of the pulses, and which, contrary to the conventional Raman based compression, is combined with a frequency upshift. The sustained peak intensity due to the inventive compression ionizes the medium leading to a prolonged frequency upshift. Both the frequency upshifting and the compression continue simultaneously along its propagation until the ionization-induced losses have caused the peak intensity to drop to levels insufficient for ionization. At the latest at this point, one can obtain a few-cycle pulse that has up-shifted in frequency by e. g. an octave. Thus, as the most advantageous and surprising result, the inventive technique provides a frequency upshift of an octave with a compression factor greater than 7.

With the invention, substantial progress over the conventional approaches as described by P. Hölzer et al. and Saleh et al. (cited above) have been obtained. The conventional approaches discuss the case where sufficiently high intensities are reached through higher order soliton compression, whereas the invention for the first time relies on the use of fundamental soliton solutions. The invention teaches the possibility of continued compression of the fundamental soliton as it blue-shifts, through adiabatic soliton compression, which is completely absent from the previous approaches. Higher order solutions are conventionally achieved by adjusting the dispersion and nonlinear parameters for soliton solutions with N > 1 (N: soliton order), which, in an ideal system without perturbations, exhibit oscillatory behaviour along propagation, which at some points and can lead to significant pulse compression and concomitantly enhanced intensities, whereas the fundamental soliton solution is characterized by propagation without change of shape. The following distinctions derive from this fundamental difference.

Firstly, the inventors have found that the fundamental soliton solution is self-stabilizing, even in the presence of perturbations such as the occurrence of ionization. The fundamental soliton reacts to perturbations by changing its frequency, duration and energy to readjust to the soliton requirements. This lies at the heart of adiabatic soliton compression. On the other hand, higher-order solitons are sensitive to perturbations, and rather react by breaking apart into several pulses. The robustness of the fundamental soliton is essential to the invention as it ensures sustained length over which blue-shifting and compression ensue.

Secondly, with the use of the fundamental soliton the ionization is self-induced and hence can be sustained as long as the intensity is high enough (e. g. tens of centimetres in practical applications), whereas in the case of higher order solitons ionization is present only as long as there is temporal overlap with the remaining pump pulse (a few centimetres typically). As reported in the above publications, blue-shifting ceases when there is no temporal overlap. The blue-shifted portion itself is too weak to cause ionization and hence does not experience any further blue-shifting nor adiabatic soliton compression.

These differences result in the following advantages of the invention: only the sustained light-plasma interaction allows shifting and wavelength tunability over large spectral ranges, e. g. more than an octave, and the concept of adiabatic soliton compression is inextricably linked to self-induced ionization. In addition, the use of the fundamental soliton guarantees higher conversion efficiencies and obviates the need to filter undesired spectral components.

According to a preferred embodiment of the invention, the output center frequency and/or the duration of the fundamental soliton light pulses output from the pulse guiding medium is tuned (adjusted). Tuning the above parameters can be obtained e. g. by setting a propagation length of the pulse guiding medium, such as cutting a waveguide fiber. Advantageously, e. g. the pulse duration simply can be adjusted by the design of the pulse guiding medium. Alternatively or additionally, the tuning can be done with the adjustment of the pump pulse source and/or setting a medium density profile inside the pulse guiding medium. As an advantage, the tuning step facilitates an adaptation of the inventive set-up to the requirements of a practical implementation, e. g. for providing light pulses in a measuring or imaging apparatus. With this embodiment of the invention, the light pulse source device includes a tuning device, which preferably is adapted for the setting of the propagation length in the pulse guiding medium, adjusting at least one of a pump laser pulse energy, a pump laser pulse center wavelength and a pump laser pulse duration, and/or adjusting the medium density profile inside the pulse guiding medium. Thus, the invention provides a technique that allows to obtain wavelength-tunable few-cycle pulses in a single device by means of the above combined process of plasma-induced frequency upshifting and adiabatic-like soliton compression.

According to a further preferred embodiment of the invention, a control of the light pulse output can be provided. Detecting a light output of the pulse guiding medium, e. g. detecting a pulse shape or spectral or temporal parameters of the pulses, can be used for creating a control signal depending on the light output of the pulse guiding medium, and the pump laser source and/or the pulse guiding medium can be controlled in dependency on the control signal such that the fundamental soliton light pulses are formed in the pulse guiding medium. For implementing this control loop, the inventive device preferably includes a detector device for monitoring a light output of the pulse guiding medium, a control device for creating a control signal depending on the light output of the pulse guiding medium, and the tuning device for controlling the pump laser source and/or the pulse guiding medium in dependency on the control signal.

As a further advantage of the invention, multiple variants of creating the fundamental soliton light pulses in the pulse guiding medium are available, which can be provided separately or in combination. With a first variant, at least one of the pump laser pulse energy, the pump laser pulse center wavelength and the pump laser pulse duration can be adjusted. With a second variant, a particular pulse guiding medium can be selected, which has a predetermined nonlinearity, a predetermined group velocity dispersion and/or a predetermined ionization threshold.

According to a particularly preferred embodiment of the invention, the pulse guiding medium comprises a hollow optical waveguide device containing an ionisable gaseous, vaporized or liquid or liquid waveguide medium. The hollow optical waveguide device generally comprises an optical waveguide with a longitudinal extension for propagating the light pulses. The waveguide includes a core which is filled with a waveguide medium. The optical features of the pulse guiding medium are defined by the superimposed optical features of the waveguide material as such and the waveguide medium. The waveguide medium can be a gas, a vapour or a liquid, having the following features. The refractive index of the waveguide medium preferably is not interspersed with resonances in the spectral region of interest. The refractive index varies (grows) smoothly with frequency in the given frequency range. Furthermore, the group velocity dispersion contribution of the waveguide medium for a given pressure does not outweigh the waveguide contribution in such a way that the total dispersion becomes normal. In other words, the anomalous dispersion is kept in the waveguide medium. Finally, the waveguide medium does not suffer permanent damage due to the photoionization used for frequency-shifting. For providing these features, the waveguide medium preferably comprises a gas, particularly preferred a noble gas, such as Ar, Ne or Xe, or other gases, such as $H_2$, $O_2$, $N_2$, or gaseous $SF_6$, or a vapour, such as Rb or Cs. Alternatively, a liquid with a low mass density could be used, such as liquid argon.

With a particularly advantageous embodiment of the invention, the hollow optical waveguide device comprises a photonic-crystal fiber (PCF). The use of a PCF for simultaneous compression and frequency up-conversion of fundamental soliton-pulses represents an independent subject of the present invention. Preferably, the PCF comprises a Kagomé fiber, a hypocycloid fiber or a square lattice fiber. PCF's have particular advantages in terms of accommodating selected waveguide media, adjusting the GVD and Kerr-nonlinearity and adjusting an operation medium density. The PCF has a hollow core, which preferably has a diameter below 150 $\mu$m. Alternatively, larger waveguide diameters can be used. Increasing the waveguide diameter may have advantages resulting from a possible reduction of the operation medium density in the waveguide. Thus, with an alternative embodiment of the invention, the hollow optical waveguide device may comprise a capillary having a diameter of about 75 $\mu$m to 200 $\mu$m.

PCF's, such as Kagomé fibers, hypocycloid fibers or square lattice fibers, have particular advantages for providing a smooth dispersion, which supports that the soliton can adjust adiabatically, a low dispersion, which facilitates pressure tunability at moderate gas pressure. The fiber dispersion should be within the range of gas dispersion at some bar (e.g. 10 bar); and broadband guidance, so that all frequencies involved in the continuous frequency shifting are guided with negligible or acceptable losses. Furthermore, PCF's allow a damage free operation in the ionization regime: this includes using a self-healing medium such as a gas inside a hollow-core fiber and low overlap of the waveguide structure with the propagating light mode.

If the pulse guiding medium comprises the hollow optical waveguide device, multiple variants for implementing the step of setting the waveguide device are available for creating the fundamental soliton light pulses, thus providing additional degrees of freedom in designing the inventive light pulse source device. Firstly, the hollow optical waveguide device can be selected to have at least one of a predetermined internal size and a predetermined dispersion of waveguide material. In particular, the hollow optical waveguide device can be selected to have a waveguide modal dispersion which is balanced against a waveguide medium dispersion at the operation medium density of the waveguide medium inside the hollow optical waveguide device. Furthermore, the hollow optical waveguide device facilitates an adjustment of the operation medium density of the waveguide medium inside the hollow optical waveguide device. In particular, a medium density profile can be adjusted inside the hollow optical waveguide device. The term "medium density" generally refers to the density of atoms or molecules of the waveguide medium in the hollow optical waveguide device. Generally, the medium density is determined by the species, physical condition and pressure of the waveguide medium. In the following, the term "pressure" is used as an equivalent to "medium density". The medium density can be adjusted using e. g. a pressure generator device and/or by cooling or heating the waveguide medium.

According to a further preferred embodiment of the invention, the light pulse source device further comprises a pressure generator device for creating the predetermined operation medium density of the waveguide medium within the hollow optical waveguide device. The pressure generator device comprises at least one reservoir including the waveguide medium, e. g. a gas, and at least one pressure conduit. The at least one pressure conduit is connected directly with the hollow optical waveguide device or with a pressure cell accommodating the hollow optical waveguide device. Multiple pressure conduits can be provided which are connected with the core of the optical waveguide device e. g. via radial openings or gaps in the waveguide structure.

Advantageously, the hollow optical waveguide device and the pressure generator device can be adjusted such that a predetermined waveguide medium density profile is provided inside the hollow optical waveguide device. The term "waveguide medium density profile" refers to any density distribution (pressure distribution), covering both a uniform (constant) medium density in the waveguide or a medium density gradient along the waveguide. Optionally the pressure between the input and output of the fibre can be different, causing the medium density gradient through the waveguide. The medium density gradient even may comprise medium density maxima/minima. Creating the medium density gradient provides an extra degree of freedom to tune the adiabatic compression process and thereby the output frequency.

Implementing the invention is not restricted to the use of the hollow optical waveguide device. Alternatively, a solid semiconductor medium, in particular a compact semiconductor waveguide can be used as the pulse guiding medium. With this embodiment, the photoionization of the pulse guiding medium comprises an excitation of electrons from the valence band to the conduction band electrons (multi-photon absorption), resulting in the frequency shift of the soliton pulses towards higher spectral energies. Soliton dynamics in the multiphoton plasma regime have been described by Husko et al. in [9]. Using the solid semiconductor medium may have advantages in terms of a compact structure of the inventive light pulse source device.

As a further alternative, the pulse guiding medium may comprise a bulk gas medium, like e. g. air in the mid-infrared range (about 3 $\mu$m) where the gas dispersion is anomalous [27]. With this embodiment, the spectral range of frequencies is restricted depending on the resonances available in the bulk gas medium, e. g. to the infrared range.

In summary, the invention has the following advantages vis-à-vis the prior art: The main advantages of the proposed invention are its simplicity, its frequency tunability, its high damage threshold, its freedom of design, and its robustness. The simplicity results from the capability of providing an all-integrated single structure design which combines two different tasks (compression, frequency upshift) that would otherwise be carried out separately. The frequency tunability is obtained as the center frequency of the output soliton pulses can be precisely tuned within the maximum achievable frequency upshift. The blue-shifting continues along some length, and hence by adjusting the length and/or the pump energy and/or the medium density profile inside the fiber, one can obtain an ultrashort pulse at a desired center frequency. The high damage threshold even removes the upper intensity limit set by the damage threshold of nonlinear crystals or solid fibers.

The freedom of design results from the fact that for a given input light pulse, the conditions of the operation of the inventive device can be met by tuning various device parameters, such as gas species and density (may also introduce a density gradient), as well as the waveguide geometry, in particular length. For instance, when a relatively low-energy pulse is used, the mode area in the waveguide can be reduced to increase the intensity and hence the ionization induced phase-shift. It is also possible to change the gas species to change the ionization energy as well as the dispersion and the Kerr nonlinearity. Advantageously, the output is robust against length variations once the maximum achievable frequency shift is reached and is robust against perturbations.

In practice, the invention, in particular if used in combination with high power fiber lasers, presents a potential replacement of ultrafast Ti:sapphire laser systems. It could offer energies of several hundreds of nano-Joules at repetition rates of several MHz, pulse durations shorter than what has been achievable with the best oscillators and unrivalled compactness and robustness.

Brief description of the drawings

Further details and advantages of the invention are described in the following with reference to the attached drawings, which show in:

Figure 1: a schematic illustration of a first embodiment of a light pulse source device according to the invention;

Figure 2: a graphic representation of group velocity and nonlinearity of a PCF used according to the invention;

Figures 3 to 5: a graphic representation of group velocity and nonlinearity of a PCF used according to the invention; and

Figures 6 to 8: schematic illustrations of further embodiments of a light pulse source device according to the invention.

Preferred embodiments of the invention

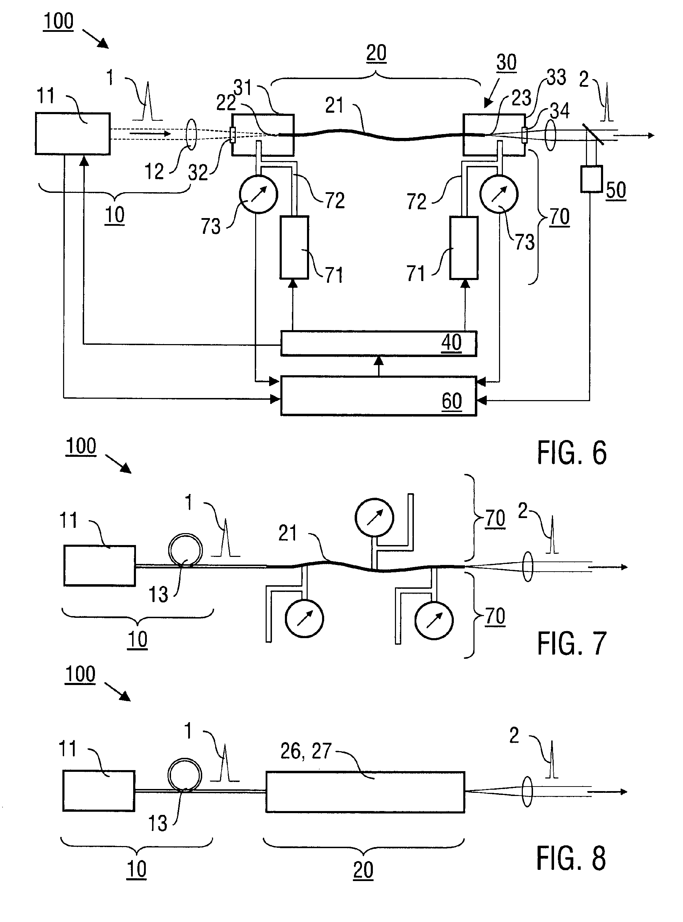

The invention uses a pulse guiding medium that can provide a nonlinear phase shift due to both the optical Kerr effect and ionization at high intensities. The pulse guiding medium has an anomalous dispersion and positive third-order dispersion within the wavelength range of its operation. Such conditions can be achieved e. g. in a gas-filled hollow waveguide, such as a Kagomé-lattice hollow-core PCF [6]. Preferred embodiments of the invention are described in the following with exemplary reference to the use of a PCF. However, it is emphasized that the invention also can be implemented using a semiconductor device or bulk gas in the mid-infrared (see Figure 8). Furthermore, it is emphasized that the invention is not restricted to the presented examples and operation parameters, but rather can be implemented with modified conditions, in particular in view of the description of adiabatic soliton compression presented below.

First embodiment

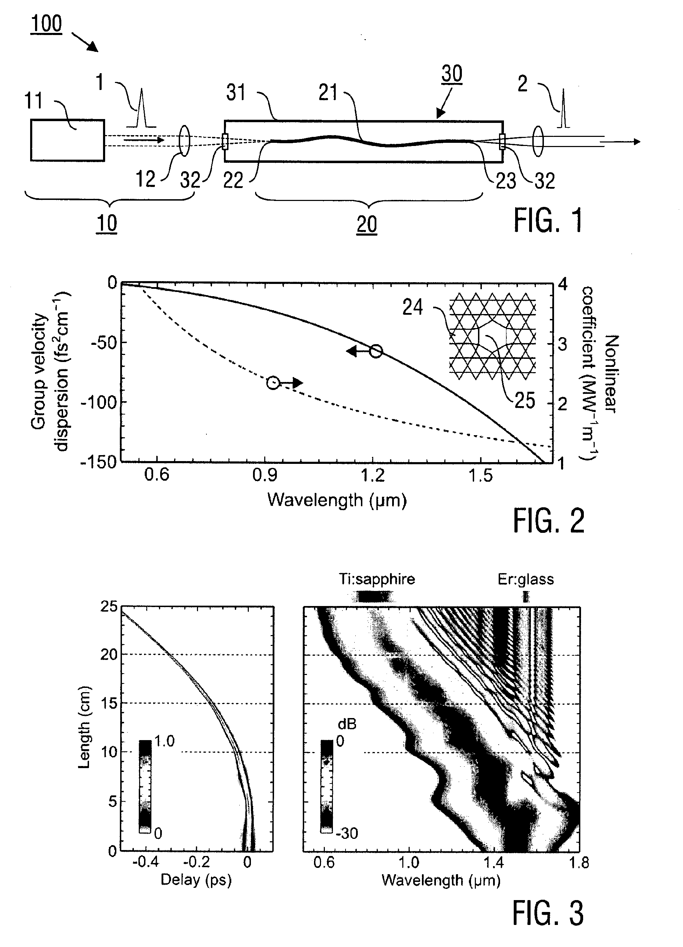

A first embodiment of a light pulse source device 100 according to the invention is schematically illustrated in Figure 1. The light pulse source device 100 comprises a pump laser source 10 with a pulse laser 11 and focusing optics 12 and a pulse guiding medium 20 comprising a PCF 21 which is arranged in a pressure system 30 including at least one optically accessible gas cell 31. The pump laser 11 is e. g. an optical parametric amplifier (OPA) or a fiber laser. PCF 21 is a Kagomé-lattice hollow-core PCF which is made using the procedure and facilities as discussed in [6]. The PCF 21 has a an inner hollow core 25 (see Figure 2, insert) with a diameter of e. g. 18 $\mu$m. A piece of PCF 21 of the required length, e. g. 25 cm, is fitted into the gas cell 31, wherein a front facet 22 and a rear facet 23 of the PCF 21 are kept in place by using e. g. V-grooves. The shape of PCF 21 in the gas cell 31 can be straight or slightly curved (as shown). The gas cell 31 is optically accessible from both facets 22, 23 of the PCF 21. This can be done by using e. g. windows 32, made of e. g. silica.

The structure consisting of the gas cell 31, the windows 32 and the PCF 21 is sealed against the environment (for instance with glue, rubber rings, plasticine etc.) to ensure full control over gas pressure and gas species in the gas cell 31 and the PCF 21. The PCF 21 is filled with gas, e. g. argon at 5 bar, by pressurizing the gas cell 31 with the help of the pressure system including gas pipes and appropriate pressure control instruments (e.g. manometers), which are not shown in Figure 1. During the application of the light pulse source device 100 in practice, the gas cell 31 can be sealed and separated from the pressure system. Alternatively, the gas cell 31 can be connected with the pressure generator device (see Figure 6).

The pump laser source 10 creates a laser beam of pump laser pulses 1, which is steered through the first window 32 to the front facet 22 of the PCF 21. For example, the pump laser pulses 1 have a duration of 30 fs full-width at half maximum, a center wavelength at 1500 nm and pulse energies in the few-$\mu$J range. As an example, 1.7 $\mu$J energy corresponds to a peak power of 50 MW (peak intensity of 41 TW/cm$^2$). The pump laser pulses 1 are coupled into the PCF 21 by using the focusing optics 12 (e.g. at least one lenses and/or at least one curved mirror) to decrease the beam of pump laser pulses 1 to a diameter matched to the acceptance angle of the PCF 21. Proper alignment is made possible by using xyz-translation stages (not shown). Inside the PCF 21, the propagating light pulses will be influenced by nonlinear, dispersive and ionization-related effects to transform its spectral and temporal properties as described in detail below with reference to Figures 2 to 5. Soliton-shaped light pulses 2 leave the PCF 21 through the second window 32, similar to the input side. The light output is directed to an application site, e. g. in a measuring apparatus (not shown).

With the light pulse source device 100, a soliton self-frequency upshift from 1500 nm to 815 nm can be observed, while simultaneously compressing the pulses down to 4 fs (corresponds to about 1.5 cycle) achieving a compression factor greater than 7. The conversion efficiency is 30%. The frequency conversion and the pulse compression ceases after about 20 cm of propagation through PCF 21, and the resulting output was a transform-limited soliton.

The light pulse source device 100 of Figure 1 can be modified, e. g. by providing a tuning device and/or a control device as described with reference to Figure 6.

Adiabatic soliton compression

If the light pulse source device 100 is to be adapted to the requirements of a particular application, the features of the pump laser source 10, the nonlinear optical properties of the pulse guiding medium 20 and the features of the pressure system can be calculated based on available analytical models or commercial simulation procedures and/or available material data, or, alternatively, reference data from comparable applications or test data can be used. Furthermore, the operation parameters can be selected in view of the following considerations of the adiabatic soliton compression.

The light pulses (optical pulses) are considered as a collection of co-propagating plane-waves with a certain amplitude and phase distribution in frequency. When summed up (i. e. Fourier transformed to the time domain) they constitute a temporal pulse of radiation. The different plane waves experience different velocities due to the material dispersion of the material they are travelling through, and also due to geometrical constraints on the propagation. This cause the pulse to broaden in time as the phase relationship between the constituent plane waves is distorted. A frequency dependent nonlinear phase shift, due to an intensity dependence of the refractive index of a material can also cause the pulse to distort and disperse in time.

The linear dispersion can conveniently be expressed by $\beta_2$, the second derivative of the propagation constant with respect to frequency, which is the first derivative of the inverse of the frequency dependent group velocity i.e.:

$$\beta_2(\omega) = \frac{\partial}{\partial \omega}\left(\frac{1}{v_g}\right)$$

where $\omega$ is the angular frequency, and $v_g$ is the group velocity, which depends on the material (i.e. gas) refractive index and waveguide geometry. For anomalous dispersion $\beta_2$ is negative.

The nonlinear phase-shift can be calculated from the peak power of the pulse, $P_0$, and the nonlinear coefficient of the geometry (i.e. waveguide), $\gamma$:

$$\gamma = \frac{\omega n_2}{c A_{eff}}$$

where $n_2$ is the nonlinear refractive index of the filling material (i.e. the gas), $c$ is the speed of light, and $A_{eff}$ is the effective transverse area of the waveguide structure. For Kagome-PCF 21 for example, $A_{eff}$ is about $1.5\,r^2$ where r is the core radius.

The balance between linear dispersion and nonlinear phase-shift can be expressed by the soliton number $N$,

$$N = \sqrt{\frac{\gamma P_0 \tau_0^2}{|\beta_2|}}$$

where $\tau_0$ is the pulse duration. For $N = 1$ the fundamental soliton is obtained. If the input soliton order $N < 1.5$, the pulse converges to the fundamental soliton. For larger values of $N$ higher order solitons are obtained.

For describing the adiabatic compression, the peak power of a soliton is expressed in terms of the energy, $E$, and pulse duration $\tau_0$ through the relationship:

$$P = \frac{E}{2\tau_0}$$

Substituting this into equation for $N$, setting $N = 1$ as for a fundamental soliton, and re-arranging, a simple expression for the soliton duration in terms of dispersion, nonlinearity and pulse energy can be obtained:

$$\tau_0 = \frac{2|\beta_2|}{\gamma E}$$

According to this equation, the fundamental soliton duration is proportional to the magnitude of the dispersion (it must be negative), and inversely proportional to the nonlinearity and pulse energy.

If such a soliton is propagating through the pulse guiding medium, and one or more of these parameters is changed, then the pulse will be compressed in time (adiabatic soliton compression). According to the invention, the fundamental soliton self-frequency blue shifts. For example, in the gas filled kagome-PCF 21, the anomalous dispersion magnitude decreases upon moving to higher frequencies, and the nonlinearity ($\gamma$) increases. Thus, adiabatic soliton compression is achieved.

Accordingly, the light pulse source device 100 is designed with a proper choice of the fiber, gas and laser pulse parameters as follows. Provided a pulse guiding medium 20, e.g. a fiber, with broadband transmission is available, the following design guidelines are fulfilled simultaneously.

- The launch soliton number has to be chosen in such a way as to ensure subsequent fundamental soliton propagation. The soliton number is e. g. between 0,5 and 1,5, in particular about N = 1. Depending on the initial pulse shape, the soliton number can deviate from the above interval.

- $\beta_3$ (third order dispersion) has to be positive, that is the magnitude of the dispersion should decrease for shorter wavelengths, in order to allow for the inventive scheme of adiabatic soliton compression.

- The intensity of the fundamental soliton has to be sufficient to cause effective ionization in order to induce blue-shifting. The refractive index shift due to the generated free electrons should be of the same order of magnitude as the refractive index shift caused by the Kerr nonlinearity

The dispersion is influenced by the pulse guiding medium, e. g. by the fiber and the gas therein. For PCF's, in the practically used range the dispersion is mainly a function of the core diameter. The contribution of the gas is a function of the chosen species and the pressure. In the practically used wavelength range, the contribution is usually anomalous, whereas the gas contribution is normal - allowing for a careful balance of the overall dispersion. The material nonlinearity is given by the gas species and pressure.

Furthermore, the pulse characteristics are adjusted to scale the dispersive, nonlinear and ionization-related interactions. Dispersion: For a given dispersion landscape (gas and fiber contributions, cf. above), the dispersive effect the pulse experiences is dependent on the pulse duration - the shorter the pulse, the stronger the dispersive effect. Nonlinearity: The material nonlinearity is given by the gas species and pressure. In addition, the nonlinear interaction depends on the fiber and the pulse parameters. For example, the core size defines how well light is confined - the smaller the core, the higher the intensity. The laser pulse duration and pulse energy determine how strong the interaction will be - the shorter the pulse and the higher the energy, the stronger the nonlinear interaction. All laser, fiber, and gas parameters are adjusted to fulfil the above condition for a fundamental soliton. In addition, in order to ensure sufficient ionization, the ionization energy of the gas and the intensity of the laser pulse are chosen accordingly. The ionization energy is only a function of the gas species, the intensity is determined by the laser pulse energy and duration and by the core size of the fiber.

Practical example

In the following, a practical example of the combined soliton pulse compression and plasma-related frequency up-conversion using the light pulse source device 100 is described with reference to Figures 2 to 5. Pivotal to the device operation are the nonlinear optical features of the PCF 21. A representative cross-sectional structure of the PCF 21 with a hollow core 25 and a glass waveguide structure 24 is shown in the inset of Figure 2. Such a PCF 21 exhibits a transmission window wide enough to contain even few cycle pulses [6]. In addition, due to the low modal overlap with the glass waveguide structure 24, PCF 21 can handle high pulse energies [10]. Most importantly when evacuated PCF 21 offers low, but anomalous, group-velocity dispersion (GVD, $\beta_2$) over a wide wavelength range, thus facilitating soliton dynamics. When filled with gas, the GVD of the system can be precisely adjusted through a proper choice of gas pressure and gas species. Following [12], the fiber contribution to the dispersion can be approximated by an expression originally proposed for capillary fibers [13].

Figure 1 shows calculated GVD and nonlinearity curves for the kagomé PCF 21 with a core diameter of 18 $\mu$m filled with 5 bar of argon. The GVD illustrates a broadband anomalous dispersion. Simultaneously, the nonlinearity $\gamma$ increases with increasing frequencies.

In order to describe soliton dynamics in the ionization regime numerically, an established uni-directional field propagation equation can be used [14-16, 8]:

$$\partial_z E(z,\omega) = i(\beta(\omega) - \omega/v)E(z,\omega)$$

$$+i\frac{\omega^2 \mu_0}{2\beta(\omega)}F\left\{\varepsilon_0 \chi^{(3)}E(z,t)^3\right\}$$

$$-\frac{\omega \mu_0}{2\beta(\omega)}F\left\{\partial_t n(z,t)\frac{I_P}{E(z,t)} + \frac{e^2}{m_e}\int_{-\infty}^{t} n(z,t')E(z,t')dt'\right\}$$

where $z$ is the propagation distance in PCF 21, t the time in a frame moving at a suitable reference velocity v, $\omega$ the angular frequency in rad $\cdot$ s$^{-1}$ and $E(z, \omega)$ the field in the spectral domain, which is given by taking the Fourier transform of the real electric field strength, i.e. $E(z, \omega) = E(z, \omega) = F\{E(z, t)\}$ . The linear dispersion of modes of PCF 21 is given by $\beta(\omega)$. The second term accounts for third-order nonlinearities where $\chi^{(3)}$ is the third-order susceptibility. $\varepsilon_0$ and $\mu_0$ are the permittivity and permeability of free space. The final term represents the influence of photoionization [17] - namely $n(z, t)$ is the time-varying free-electron density; $I$p is the first ionization energy; and $e$ and $m_e$ are the charge and mass of an electron. The underlying ionization rate is calculated using a model developed by Ammosov et al. [17] and verified using the alternative Yudin-Ivanov model [18]. As in the case of solid-core fiber, soliton dynamics arise from the interplay between dispersion and a Kerr-based nonlinearity. In addition, the pulse is subject to ionization effects provided the pulse intensity is high enough. The instantaneous generation of free electrons causes the refractive index to drop, imposing a phase modulation [4] that is however asymmetric as the reverse process of recombination occurs on time-scales longer than the pulse duration. In the spectral domain, this phase-modulation produces a frequency up-shift [19].

The light pulse source device 100 is designed in an example to convert light from one laser wavelength (1500 nm, broadly used emission of Er-doped fiber lasers) to another one (800 nm, broadly used emission of Ti:sapphire lasers), although this technique can be adapted to other wavelengths. The parameters below are perfectly amenable to experimental realization, for example with optical parametric amplifiers or fiber laser systems. The launched pulse has a soliton number of

$$N = (\gamma \; P_0 \; t_0{}^2 \; / \; |\beta_2|)^{0.5} \approx 1.4.$$

Figure 3 presents the spectral and temporal evolution of the pulse along 30 cm of the PCF 21. Most of the pulse energy undergoes a coherent spectral blue-shift from a wavelength of 1500 nm, and eventually reaching a center wavelength of 815 nm with a conversion efficiency of 30%. This self-frequency shifting of a soliton is redolent of the more widely known Raman effect, but contrary in sign [5]. The remaining energy is transferred to linear modes around the original pump wavelength or lost in the ionization process. Frequency-shifting kicks in at around 4 cm where the pulse has gained sufficient intensity to ionize the gas. Pulses with non-integer soliton number shed excess energy into linear modes, simultaneously adjusting their peak power and pulse duration to converge to a soliton. As a result of starting with $N > 1$, the pulse initially undergoes a slight temporal compression and hence reaches an enhanced peak intensity. From this point on the pulse is influenced by the presence of a time-varying free-electron density which causes a continuous blue-shift over the following 20 cm. In the temporal domain, this is accompanied by a considerable reduction in pulse duration. Both the blue-shifting and the compression cease when the ionization-induced losses have caused the peak intensity to drop to levels insufficient for ionization.

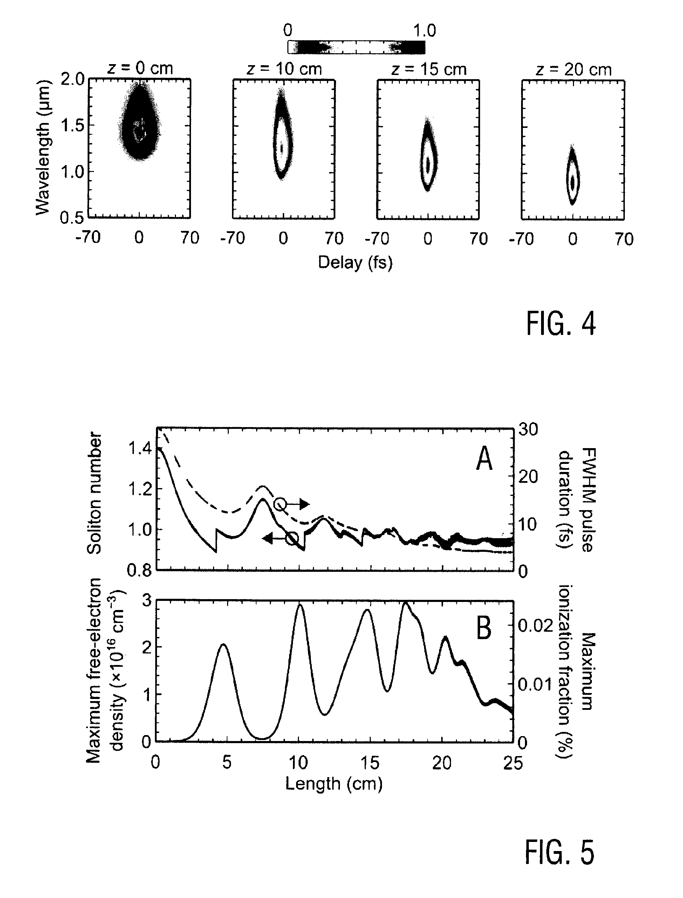

Further insight into the frequency shift and pulse compression can be observed in the sequence of XFROG traces shown in Figure 4. The almost chirp-free output pulse has an energy of 542 nJ, and a FWHM duration of 4 fs, corresponding to about 1.5 optical cycles.

The physics behind the compression is closely related to adiabatic pulse compression [7], with the important difference that, due to the ionization losses, the pulse energy is not conserved. Adiabatic soliton compression in hollow-core PCFs was investigated theoretically in [20], by considering the fiber-gas system to be axially varying, which could be achieved using a negative pressure gradient to produce an axially-decreasing dispersion. In the inventive system, however, the pressure preferably is invariant with position and the propagating medium remains the same along the fiber length. Instead, the soliton perceives decreasing dispersion and increasing nonlinearity due to its increasing center frequency. As a result it compresses while undergoing the self-frequency blue-shift. For a shift from 1500 nm to 815 nm the magnitude of $\beta_2$ reduces by a factor of 6.54, and the nonlinear coefficient increases by a factor of 1.84. This suggests a compression factor of 12 in a lossless case. Photoionization-induced losses over the entire propagation distance cause about 70% energy loss, reducing this factor to about 7.5.

It is worth noting some differences from the results reported in [4], where the process was pumped at 800 nm. In that case soliton numbers of 5 to 9 were required to reach sufficient intensities, whereas here the blue-shifting dynamics of the fundamental soliton are used. In Figure 5A, it can be seen how a soliton under the influence of ionization oscillates around $N = 1$. Comparing the precise dynamics of ionization in both systems reveals that in [4] the frequency shift occurs as an abrupt process. On the contrary, with the invention, the blue-shifting is rather continuous and prolonged. At the point of initial ionization the free-electron density is lower, allowing for lower ionization losses at the initial stages of propagation, which helps perpetuate the process over longer distances (Figure 5B). In addition, in this case the pump wavelength is located farther away from the zero dispersion wavelength which allows for a bigger frequency shift towards the blue.

These results might be useful for a combined frequency up-shifter/pulse-compressor for fs-pulses in the few-$\mu$J energy range. In contrast to the more conventional method of using second harmonic generation (SHG), this technique is perfectly suited for high-intensity ultrashort pulses. In addition, the frequency shift can be tuned by choosing an appropriate fiber length. If brought to experimental fruition, the proposed system in combination with high power fiber lasers might present a potential replacement of ultrafast Ti:sapphire laser systems. It could offer energies of several hundreds of nJ at repetition rates of several MHz, pulse durations shorter than those that have been achievable with the best oscillators, and unrivalled compactness and robustness.

Further embodiments

Figure 6 schematically illustrates a further embodiment of a light pulse source device 100 according to the invention. The light pulse source device 100 comprises a pump laser source 10 with a pulse laser 11 and focusing optics 12 and a pulse guiding medium 20 comprising a PCF 21, as shown in Figure 1. Contrary to the first embodiment, the pressure system 30 includes two gas cells 31, 33, each accommodating one of the front and rear facets 22, 23 of the PCF 21. The gas cells 31, 33 allow the creation of a pressure gradient within the PCF 21. The pressure system 30 is connected with a pressure generator device 70, which comprises two controllable gas reservoirs 71 including the waveguide medium, e. g. argon gas. Each of the gas reservoirs 71 is connected via pressure conduits 72 with one of the gas cells 31, 33. The pressure in the gas cells 31, 33 is controlled e. g. with valves (not shown) at the gas reservoirs 71 and measured with manometers 73. In a practical example, the pressure in gas cells 31, 33 is 5 bar and 7 bar, resp.. The components 10, 20, 30 and 70 can be provided as described in [21, 22].

Figure 6 schematically shows a tuning device 40, which is connected with the gas reservoirs 71 and the pulse laser 11. The tuning device 40 is arranged for adjusting operation parameters of the light pulse source device 100, in particular the gas pressure in the gas cells 31, 32 and the pump laser pulse energy, the pump laser pulse centre wavelength and/or the pump laser pulse duration of the pump pulses 1. Depending on the application of the invention, the tuning device 40 can adjust preset operation parameters, or it can be configured for a manual adjustment, or a control loop can be implemented using the detector device 50 and the control device 60.

The detector device 50 is arranged for monitoring the light output of the pulse guiding medium. It comprises e. g. a photosensitive light intensity detector or a more complex device, e. g. for spectrally and/or temporally resolved detection of the light output. The control device 60 receives a detector signal from the detector device 50, as well as operation signals from the gas reservoirs 71 and the pulse laser 11. The detector signal indicates whether a fundamental soliton is formed in the PCF 21. The operation signals indicate the current operation conditions of the components 10, 70. In dependency on the detector signal and the operation signals, the control device 60 creates a control signal, which is supplied to the tuning device 40 for adjusting the operation parameters of the components 10, 70.

The inventive light pulse source device 100, e. g. according to Figure 6, can be further modified by providing a temperature setting device (not shown), which is arranged for setting a temperature of the pulse guiding medium, e. g. a constant temperature or a profile with changing temperature. The temperature setting device may comprise a heating device, such as a resistance heater, and/or a cooling device, such as a He cooler, in thermal contact with the pulse guiding medium, e. g. with the PCF. As an example, liquid argon can be kept in the PCF at an appropriate operation temperature using the temperature setting device.

Figure 7 shows further modifications of the light pulse source device 100 according to the invention, which can be implemented in combination with features of the other embodiments. Contrary to Figure 1, the embodiment of Figure 7 does not includes a pressure system. The pressure generator device 70 is directly connected with the pulse guiding medium 20, e. g the PCF 21. Pressure conduits 72 are directly coupled with the PCF 21, e. g. with radial openings in the waveguide structure thereof. The pressure generator device 70 includes multiple gas reservoirs 71 which are arranged for providing a pressure profile in the PCF 21. The pressure profile can be adjusted with a tuning device and optionally a control device as shown in Figure 6.

Furthermore, Figure 7 shows that the pump laser device 10 comprises a combination of a pump laser 11 and a fiber laser 13 creating the pump pulses 1. The output end of the fiber laser 13 is directly coupled with the front facet of the PCF 21, so that a focussing optic can be omitted.

Figure 8 generally illustrates that the PCF used with the above embodiments can be replaced by a semiconductor medium or bulk gas based pulse guiding medium 20. With preferred variants, a semiconductor medium waveguide 26 is provided which is made of GaInP [9], or a bulk gas container 27 is provided which includes air. The semiconductor medium waveguide 26 or the bulk gas container 27 can be adjusted as described with reference to the above embodiments.

The features of the invention disclosed in the above description, the drawings and the claims can be of significance both individually as well as in combination for the realization of the invention in its various embodiments.

**Claims**

**1.** Method of generating light pulses, comprising the steps of

  - providing pump laser pulses (1) with a pump laser source (10),
  - coupling the pump laser pulses (1) into a pulse guiding medium (20) having an anomalous group-velocity dispersion and a Kerr nonlinearity, and
  - propagating the pump laser pulses along the pulse guiding medium (20), wherein

- soliton-shaped light pulses are formed from the pump laser pulses within the pulse guiding medium (20), and
- resulting from a photoionization of the pulse guiding medium (20) by the soliton-shaped light pulses, the soliton-shaped light pulses are subjected to a frequency shift towards higher spectral energies,

**characterized by** the further step of

- setting the pump laser source (10) and the pulse guiding medium (20) such that the soliton-shaped light pulses are fundamental soliton light pulses (2) propagating in the pulse guiding medium (20), said fundamental soliton light pulses (2) having sufficient intensity for inducing the photoionization, wherein
- the group-velocity dispersion of the pulse guiding medium (20) being selected such that a ratio of the group velocity dispersion and the power dependent Kerr nonlinearity ($\gamma$) decreases with increasing frequency and the fundamental soliton light pulses (2) are compressed simultaneously with the frequency shift.

2. Method according to claim 1, including the step of

- tuning at least one of an output centre frequency and a duration of the fundamental soliton light pulses (2).

3. Method according to claim 2, wherein the tuning step includes at least one of

- setting a propagation length of the pulse guiding medium (20),
- adjusting at least one of a pump laser pulse energy, a pump laser pulse centre wavelength and a pump laser pulse duration, and
- adjusting a medium density profile inside the pulse guiding medium (20).

4. Method according to one of the foregoing claims, including the steps of

- monitoring a light output (3) of the pulse guiding medium (20),
- creating a control signal depending on the light output of the pulse guiding medium (20), and
- controlling at least one of the pump laser source (10) and the pulse guiding medium (20) in dependency on the control signal such that the fundamental soliton light pulses (2) are formed in the pulse guiding medium (20).

5. Method according to one of the foregoing claims, wherein the setting step includes creating the fundamental soliton light pulses (2) by at least one of

- adjusting at least one of a pump laser pulse energy, a pump laser pulse centre wavelength and a pump laser pulse duration, and
- selecting the pulse guiding medium (20) having at least one of a predetermined nonlinearity, a predetermined group velocity dispersion and a predetermined ionization threshold.

6. Method according to one of the foregoing claims, wherein the pulse guiding medium (20) comprises

- a hollow optical waveguide device (21) containing an ionisable waveguide medium,
- a semiconductor waveguide (26), or
- a bulk gas medium (27).

7. Method according to claim 6, wherein the pulse guiding medium (20) comprises the hollow optical waveguide device (21), which including at least one of the features

- the hollow optical waveguide device (21) comprises a photonic-crystal fiber (PCF), in particular a Kagomé fiber, a hypocycloid fiber or a square lattice fiber, or a capillary, and
- the waveguide medium is a gas, a vapour or a liquid.

8. Method according to claim 6 or 7, wherein the pulse guiding medium (20) comprises the hollow optical waveguide device (21) and the setting step includes creating the fundamental soliton light pulses (2) by at least one of

- selecting the hollow optical waveguide device (21) having at least one of a predetermined internal size and a predetermined dispersion of waveguide material,
- adjusting an operation medium density of the waveguide medium inside the hollow optical waveguide device (21),

- adjusting a medium density profile inside the hollow optical waveguide device (21), and
- selecting the hollow optical waveguide device (21) having a predetermined waveguide modal dispersion being balanced against a waveguide medium dispersion at the operation medium density of the waveguide medium inside the hollow optical waveguide device (21).

9.  Light pulse source device (100), comprising:

    - a pump laser source (10), being adapted for providing pump laser pulses, and
    - a pulse guiding medium (20) being capable of propagating the pump laser pulses, wherein
    - the pump laser source (10) is arranged for coupling the pump laser pulses into the pulse guiding medium (20),
    - the pulse guiding medium (20) has an anomalous group-velocity dispersion and a power dependent Kerr nonlinearity ($\gamma$), so that it is capable of forming soliton-shaped light pulses from the pump laser pulses, and
    - the pump laser source (10) and the pulse guiding medium (20) are configured such that, resulting from a photoionization of the pulse guiding medium (20) by the soliton-shaped light pulses, the soliton-shaped light pulses can be subjected to a frequency shift towards higher spectral energies,

    **characterized in that**

    - the pump laser source (10) and the pulse guiding medium (20) are configured such that the soliton-shaped light pulses are fundamental soliton light pulses (2) propagating in the pulse guiding medium, said fundamental soliton light pulses (2) having sufficient intensity for inducing the photoionization, wherein
    - the group-velocity dispersion of the pulse guiding medium (20) being selected such that a ratio of the group velocity dispersion and the Kerr nonlinearity decreases with increasing frequency and the fundamental soliton light pulses (2) are temporally compressed simultaneously with the frequency shift.

10. Light pulse source device according to claim 9, further comprising

    - a tuning device (40) adapted for tuning at least one of an output centre frequency and a duration of the fundamental soliton light pulses (2).

11. Light pulse source device according to claim 10, wherein the tuning device (40) is configured for at least one of

    - setting a propagation length of the pulse guiding medium (20),
    - adjusting at least one of a pump laser pulse energy, a pump laser pulse centre wavelength and a pump laser pulse duration, and
    - adjusting a medium density profile in the pulse guiding medium (20).

12. Light pulse source device according to one of the claims 10 to 11, further comprising

    - a detector device (50) arranged for monitoring a light output of the pulse guiding medium (20),
    - a control device (60) arranged for a creating control signal depending on the light output of the pulse guiding medium (20), and
    - the tuning device (40) arranged for adjusting at least one of the pump laser source (10) and the pulse guiding medium (20) in dependency on the control signal such that the fundamental soliton light pulses (2) are formed in the pulse guiding medium (20).

13. Light pulse source device according to one of the claims 9 to 12, wherein the pulse guiding medium (20) comprises

    - a hollow optical waveguide device (21) containing an ionisable waveguide medium,
    - a semiconductor waveguide (26), or
    - a bulk gas medium (27).

14. Light pulse source device according to claim 13, wherein the pulse guiding medium (20) comprises the hollow optical waveguide device (21), which includes at least one of the features

    - the hollow optical waveguide device (21) comprises a photonic-crystal fiber (PCF), in particular a Kagomé fiber, a hypocycloid fiber or a square lattice fiber, or a capillary,

and

- the waveguide medium comprises a gas, a vapour or a liquid.

**15.** Light pulse source device according to claim 13 or 14, wherein the pulse guiding medium (20) comprises the hollow optical waveguide device (21), which includes at least one of the features

- the hollow optical waveguide device (21) has at least one of a predetermined internal size and a predetermined dispersion of waveguide material selected such that the soliton-shaped light pulses are fundamental soliton light pulses (2) propagating in the hollow optical waveguide device (21),
- the waveguide medium has at least one of a predetermined nonlinearity, a predetermined group velocity dispersion and a predetermined ionization threshold selected such that the soliton-shaped light pulses are fundamental soliton light pulses (2) propagating in the hollow optical waveguide device (21).

**16.** Light pulse source device according to one of the claims 13 to 15, wherein the pulse guiding medium (20) comprises the hollow optical waveguide device (21), further comprising

- a pressure generator device (70) being arranged for creating a predetermined operation medium density of the waveguide medium within the hollow optical waveguide device (21).

**17.** Light pulse source device according to claim 16, wherein

- the hollow optical waveguide device (21) and the pressure generator device (70) are adapted for adjusting a waveguide medium density profile inside the hollow optical waveguide device (21).

FIG. 1

FIG. 2

FIG. 3

FIG. 4

FIG. 5

FIG. 6

FIG. 7

FIG. 8

Europäisches
Patentamt

European
Patent Office

Office européen
des brevets

# EUROPEAN SEARCH REPORT

Application Number

EP 13 00 2465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A. FEDOTOV ET AL: "Ionization-induced blueshift of high-peak-power guided-wave ultrashort laser pulses in hollow-core photonic-crystal fibers", PHYSICAL REVIEW A, vol. 76, no. 5, 1 November 2007 (2007-11-01), XP55077567, ISSN: 1050-2947, DOI: 10.1103/PhysRevA.76.053811 * pages 053811-1, left-hand column - pages 053811-5, right-hand column; figures 1-3 * ----- | 1-17 | INV. H01S3/00 ADD. H01S3/13 G02F1/35 |
| Y,D | P. HÖLZER ET AL: "Femtosecond Nonlinear Fiber Optics in the Ionization Regime", PHYSICAL REVIEW LETTERS, vol. 107, no. 20, 1 November 2011 (2011-11-01), XP55077691, ISSN: 0031-9007, DOI: 10.1103/PhysRevLett.107.203901 * pages 203901-1, left-hand column - pages 203901-4, left-hand column; figures 1-3 * ----- | 1-17 | |
| Y | HÖLZER P ET AL: "4% conversion of sub-muJ near-IR pulses to deep UV in fundamental mode of Ar-filled PCF", CONFERENCE ON LASERS AND ELECTRO-OPTICS (CLEO) AND QUANTUM ELECTRONICS AND LASER SCIENCE CONFERENCE (QELS), 2010 : 16 - 21 MAY 2010, SAN JOSE, CA, USA, IEEE, PISCATAWAY, NJ , USA, 16 May 2010 (2010-05-16), pages 1-2, XP031700636, ISBN: 978-1-55752-890-2 * page 1 - page 2; figure 1 * ----- | 1-17 | TECHNICAL FIELDS SEARCHED (IPC) H01S G02F |

The present search report has been drawn up for all claims

| Place of search | Date of completion of the search | Examiner |
|---|---|---|
| Munich | 6 September 2013 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **FRANKEN et al.** *Phys. Rev. Lett.,* 1961, vol. 7, 118
- **NISOLI et al.** *Appl. Phys. Lett.,* 1996, vol. 68, 2793
- **MAMYSHEV et al.** *Phys. Rev. Lett.,* 1993, vol. 71, 73
- **HÖLZER et al.** *Phys. Rev. Lett.,* 2011, vol. 107, 203901
- **SALEH et al.** *Phys. Rev. Lett.,* 2011, vol. 107, 203902
- **RUSSELL.** *J. Lightwave Technol.,* 2006, vol. 24, 4729
- **KUEHL.** *J. Opt. Soc. Am. B,* 1988, vol. 5, 709
- **CHANG et al.** *Opt. Express,* 2011, vol. 19, 21018
- **HUSKO et al.** *Nature Scientific Reports*
- **TRAVERS et al.** *J. Opt. Soc. AM. B,* 2011, vol. 28, A11-A26
- **JOLY et al.** *Phys. Rev. Lett.,* 2011, vol. 106, 203901
- **NOLD et al.** *Opt. Lett.,* 2010, vol. 35, 2922-2924
- **MARCATILI et al.** *Bell Syst. Tech. J.,* 1964, vol. 43, 1783-1809
- **HUSAKOU et al.** *Phys. Rev. Lett.,* 2001, vol. 87, 203901
- **KOLESIK et al.** *Phys. Rev. Lett.,* 2002, vol. 89, 283902
- **KINSLER.** *Phys. Rev. A,* 2010, vol. 81, 013819
- **GEISSLER et al.** *Phys. Rev. Lett.,* 1999, vol. 83, 2930-2933
- **AMMOSOV et al.** *Sov. Phys. JETP,* 1986, vol. 64, 1191-1194
- **YUDIN et al.** *Phys. Rev. A,* 2001, vol. 64, 013409
- **WOOD et al.** *IEEE T. Plasma Sci.,* 1993, vol. 21, 20-33
- **LÆGSGAARD et al.** *Opt. Lett.,* 2009, vol. 34, 3710-3712
- **NOLD.** Nonlinear femtosecond photonics in gas-filled hollow-core photonic crystal fibres. *Ph.D. thesis, Universität Erlangen-Nürnberg,* 2011
- **HÖLZER.** Nonlinear fiber optics in gases and dilute plasma. *Ph.D. thesis, Universität Erlangen-Nürnberg,* 2012
- **COUNY et al.** *Opt. Lett.,* 2006, vol. 31, 3574-3576
- **WANG et al.** *Opt. Lett.,* 2011, vol. 36, 669-671
- **COUNY et al.** *Opt. Express,* 2008, vol. 16, 20626-20636
- **SALEH et al.** *Phys. Rev. A,* 2011, vol. 84, 063838
- **SHIM et al.** *Opt. Express,* 2011, vol. 19, 9118
- **TAJIMA.** *Opt. Lett.,* 1987, vol. 12, 54-56
- **CHERNIKOV et al.** *Opt. Lett.,* 1993, vol. 18, 476-478
- **IWATSUKI et al.** *IEEE Photonics Technology Letters,* 1991, vol. 3, 1074-1076
- **TRAVERS et al.** *Opt. Express,* 2007, vol. 15, 13203-13211
- **GORDON.** *Opt. Lett.,* 1986, vol. 11, 662-664